# EUROPEAN PATENT APPLICATION

(11) **EP 2 015 600 A1**
(43) Date of publication of application: **14.01.2009**
(21) Application number: 07742535.3
(22) Date of filing: 26.04.2007
(51) Int. Cl.: H04Q 7/38, H04Q 7/36

(54) **BASE STATION, MOBILE STATION, AND COMMUNICATION METHOD**

(30) Priority: 01.05.2006 JP 2006127998
(71) Applicant: NTT DoCoMo, Inc., Chiyoda-ku Tokyo 100-6150 (JP)
(72) Inventor: HARADA, Atsushi, Chiyoda-ku, Tokyo 100-6150 (JP); ABETA, Sadayuki, Chiyoda-ku, Tokyo 100-6150 (JP)
(74) Representative: HOFFMANN EITLE
(86) International application number: PCT/JP2007/059100
(87) International publication number: WO 2007/129597

(57) **Abstract**

A base station is disclosed. The base station includes a transmitting unit which variably controls a TTI length including multiple subframes, each of which is to be allocated to a mobile station, and transmits to the mobile station scheduling information which indicates allocation of wireless resources to each user; a receive-acknowledgment determining unit which determines whether a receive acknowledgment for the scheduling information is reported from the mobile station; and a shared-channel transmitting unit which transmits a shared channel if it is determined that the receive acknowledgment is received.

## Description

### BACKGROUND OF THE INVENTION

### 1. Field of the Invention

The present invention relates to base stations, mobile stations, and method of communicating.

### 2. Description of the Related Art

In HSDPA (High speed downlink packet access), HS-PDSCH, which carries data traffic is determined on a fixed basis with 3 slots (2 ms) as the unit of measure. (See TS25.211 Section 7.8 and TS25.214 Section 6A.1.1, for example.) In HSDPA, data is transferred from layer 2 to layer 1 with three slots as the unit of measure.

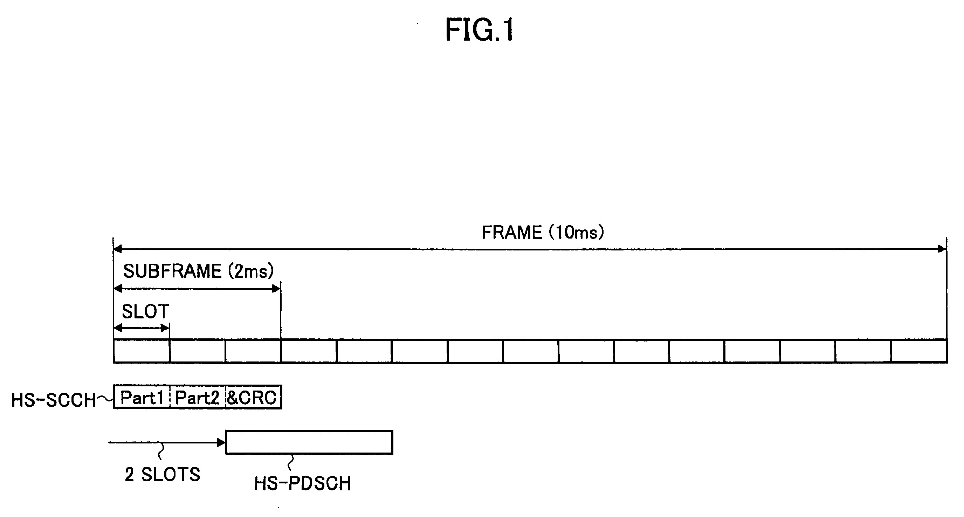

Allocation of transmission opportunities in HSDPA is described with reference to FIG. 1.

Each UE receives an HS-SCCH, and, for allocation of transmission opportunities for an own UE, a subsequent HS-PDSCH is received, and an HS-DSCH is decoded. In HSDPA, if one UE fails in receiving the HS-SCCH, as a base station cannot receive a reception acknowledgment for the HS-DSCH, a DTX is detected, and the HS-DSCH is retransmitted.

On the other hand, in standardizing evolved UTRA, supporting a variable-length TTI (transmission time interval) is being proposed. (See Non-patent documents: Motorola, R2-060122, "Layer 1 Data Transfer Formats and Definitions", 3GPP TSG RAN WG2 #50 Sophia Antipolis, France, 9-13 January 2006; Ericsson, R2-060868, "Increased TTI Length", 3GPP TSG-RAN Joint WG1/WG2 Athens, Greece, 27-31 March 2006; and Motorola, R2-060944, "HARQ Considerations", 3GPP TSG RAN WG2 #52 Athens, Greece, 27-31 March 2006, for example.)

### SUMMARY OF THE INVENTION

### [Problem(s) to be solved by the Invention]

However, the related art as described above has the following problem.

In the variable-length TTI, even for making the length of the TTI, which includes multiple subframes, variable for transmitting, downlink-scheduling information (DL-SI) for reporting transmission allocation opportunities that correspond to HS-SCCH in HSDPA is transmitted from a base station to a mobile station.

In the mobile station, where the downlink scheduling information is decoded, when a control method similar to HSDPA is performed, a downlink shared channel (DL-SCH) is transmitted even when a decoding error of the downlink scheduling information occurs at the mobile station. In this case, the downlink shared channel is transmitted without allowing the mobile station to receive information about any transmission allocation to the own mobile station, making it not possible to receive the downlink shared channel at the mobile station. Thus, in the base station, allocated transmission opportunities are wasted.

In the evolved UTRA standardization, allocating a maximum of approximately 20 MHz as a transmission band is envisaged, which, when compared to HSDPA of approximately 5 MHz as a transmission band, causes the transmit data capacity to vary by a factor of approximately 4. Thus, loss in a case such that the downlink shared channel cannot be received may become large.

Thus, the present invention aims to solve at least one of the problems described above, and to provide a base station, a mobile station, and a method of communicating that make it possible to prevent a case such that a downlink shared channel cannot be received due to a decoding error of the downlink scheduling information.

### [Means for solving the Problem]

In order to solve the problem as described above, a base station of the present invention includes a transmitting unit which variably controls a TTI length including multiple subframes, each of which is to be allocated to a mobile station, and transmits to the mobile station scheduling information which indicates allocation of wireless resources to each user; a receive-acknowledgment determining unit which determines whether a receive acknowledgment for the scheduling information is reported from the mobile station; and a shared-channel transmitting unit which transmits a shared channel if it is determined that the receive acknowledgment is received.

Such arrangement as described above makes it possible at the mobile station to prevent not receiving a downlink shared channel due to an error in decoding downlink scheduling information, and at the base station to eliminate waste in allocated transmission opportunities.

The mobile station of the present invention includes a scheduling-information decoding unit which decodes scheduling information indicating allocation of wireless resources to each user that is reported by a base station; and a receive-acknowledgment generating unit which generates a receive acknowledgment for the scheduling information according to the decoded result of the scheduling information.

The features as described above make to possible to eliminate a case such that a downlink shared channel is not received due to a decoding error of downlink scheduling information.

The method of communicating according to the present invention includes the steps of: transmitting, by a base station to a mobile station, scheduling information indicating allocation of wireless resources to each user; decoding, by the mobile station, scheduling information indicating allocation of wireless resources to each user that is reported by the base station; generating, by the mobile station, a receive acknowledgment for the scheduling information according to the decoded result of the scheduling information; determining, by the base station, whether the receive acknowledgment for the scheduling information is reported from the mobile station; and transmitting, by the base station, a shared channel if it is determined that the receive acknowledgment is received.

Such an arrangement as described above makes it possible at the mobile station to prevent not receiving a downlink shared channel due to an error in decoding downlink scheduling information, and at the base station to eliminate waste in allocated transmission opportunities.

### [Advantage of the Invention]

The embodiment of the present invention makes it possible to realize a base station, a mobile station, and a method of communicating that prevent a downlink shared channel not being received due to a decoding error of downlink scheduling information.

### BRIEF DESCRIPTION OF THE DRAWINGS

FIG. 1 is a diagram explaining allocation of transmission opportunities in HSDPA;
FIG. 2 is a diagram explaining allocation of transmission opportunities in a wireless communications system according to an embodiment of the present invention;
FIG. 3 is a diagram explaining transmit timings in the wireless communications system according to an embodiment of the present invention;
FIG. 4 is a partial block diagram illustrating a base station according to an embodiment of the present invention;
FIG. 5 is an explanatory diagram illustrating an example of scheduling information according to an embodiment of the present invention;
FIG. 6 is a partial block diagram illustrating a mobile station according to an embodiment of the present invention;
FIG. 7 is an explanatory diagram illustrating an operation of a base station according to an embodiment of the present invention;
FIG. 8 is an explanatory diagram illustrating an operation of a mobile station according to an embodiment of the present invention;
FIG. 9 is a partial block diagram illustrating a base station according to an embodiment of the present invention;
FIG. 10 is a partial block diagram illustrating a mobile station according to an embodiment of the present invention;
FIG. 11 is an explanatory diagram illustrating an operation of a base station according to an embodiment of the present invention;
FIG. 12 is an explanatory diagram illustrating an operation of a mobile station according to an embodiment of the present invention;
FIG. 13 is a partial block diagram illustrating a base station according to an embodiment of the present invention; and
FIG. 14 is a partial block diagram illustrating a mobile station according to an embodiment of the present invention.

### DESCRIPTION OF THE PREFERRED EMBODIMENTS

### [Description of Notations]

100 Base station; 200 Mobile station

### [Best Mode of Carrying Out the Invention]

A description is given below with regard to preferred embodiments of the present invention.

Throughout the drawings for explaining the embodiments, the same letters are used for those having the same functions, so that repetitive explanations are omitted.

A wireless communications system according to an embodiment of the present invention is explained.

The wireless communications system according to the present embodiment includes a base station 100 and a mobile station 200.

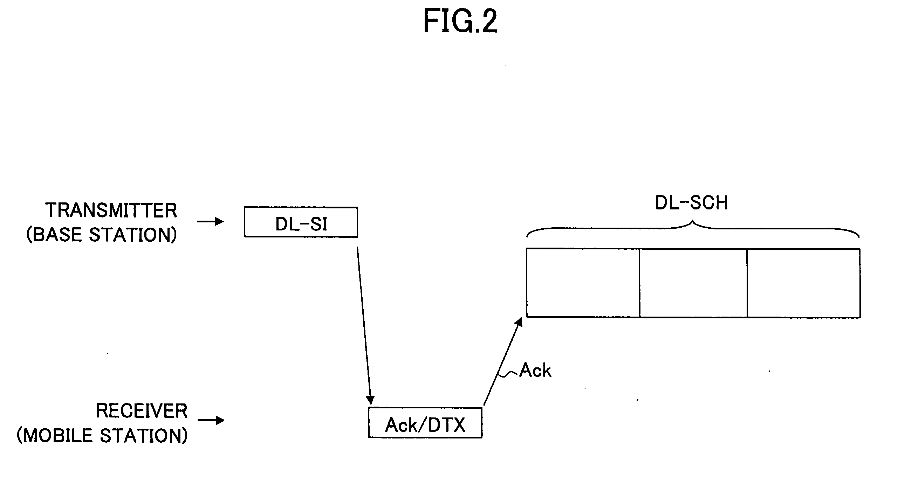

In the mobile communications system according to the present embodiment, as shown in FIG. 2, when downlink scheduling information (DL-SI) is received, the mobile station 200 transmits a receive acknowledgment (DL-SI-Ack) for the DL-SI. When the receive acknowledgment is received from the mobile station 200, the base station 100 transmits a downlink shared channel (DL-SCH).

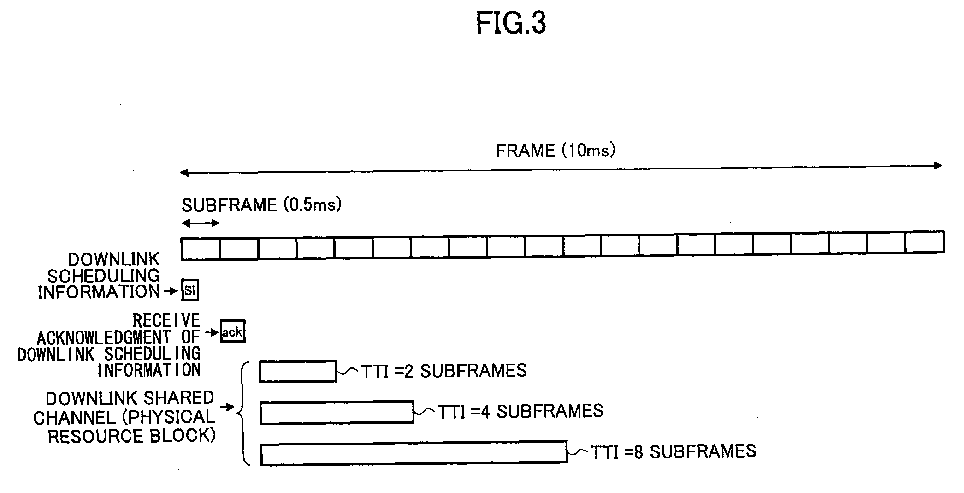

More specifically, as shown in FIG. 3, the base station 100 reports the downlink scheduling information to the mobile station 200. Moreover, when the receive acknowledgment (DL-SI-Ack) for the scheduling information is received from the mobile station 200, the base station 100 transmits data in multiple subframes corresponding to TTIs allocated to the mobile station. For example, the base station 100 transmits data in two subframes when allocating a TTI including two subframes to the mobile station 200, in four subframes when allocating a TTI including four subframes to the mobile station 200, and in eight subframes when allocating a TTI including eight subframes to the mobile station 200. The base station 100 variably controls the number of subframes making up a TTI allocated to the mobile station 200.

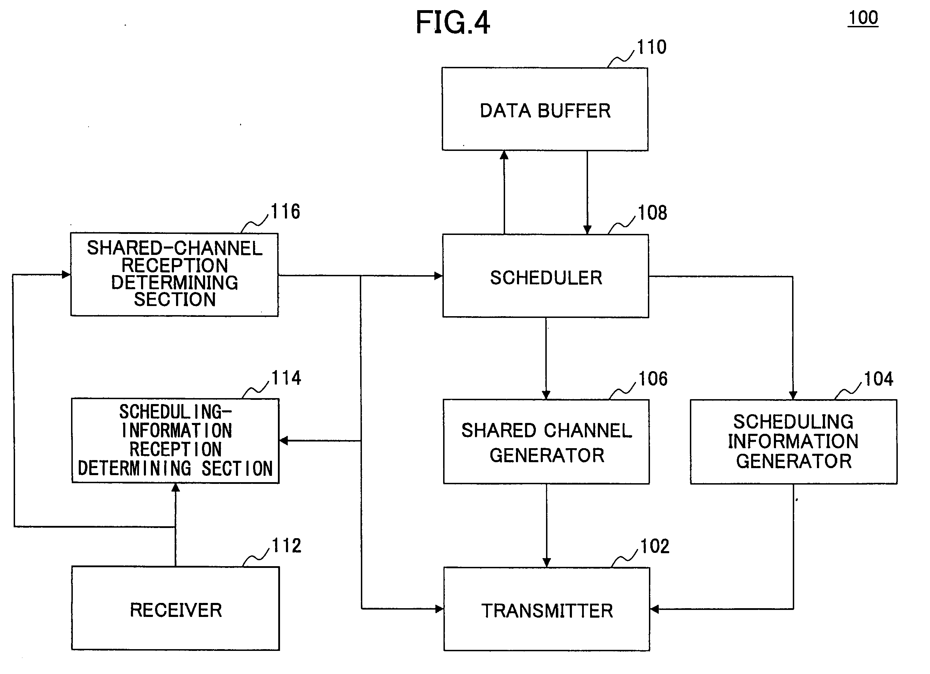

As shown in FIG. 4, the base station 100 includes a transmitter 102, a scheduling information generator 104, a shared channel generator 106 as a unit which transmits a shared channel, a scheduler 108 as a scheduling unit, a data buffer 110, a receiver 112, a scheduling-information reception determining section 114 as a unit which determines a receive acknowledgment, and a shared-channel reception determining section 116.

Scheduling which allocates wireless resources to each user is performed at the scheduler 108 in order to transmit data stored in the data buffer 110, and information indicating the result of the scheduling is input to the scheduling information generator 104.

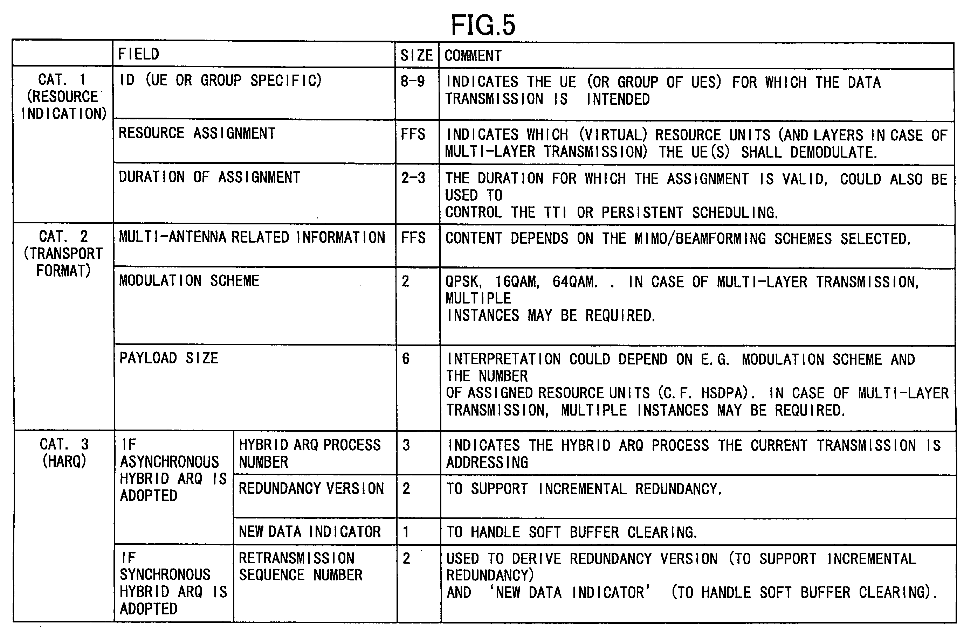

The scheduling information generator 104 generates, based on information indicating the scheduling result input, scheduling information including information indicating users to which wireless resources are allocated, and reports the generated information to the mobile station 200 via the transmitter 102. For example, the scheduling information generator 104 generates scheduling information including at least part of information as shown in FIG. 5.

More specifically, the scheduling information generator 104 generates a user ID (UE or group specific) which is specific for a UE or group of UEs, resource assignment information (resource assignment) and the number of subframes (duration assignment) that are included in Category 1; multi-antenna related information, a modulation scheme, and a payload size that are included in Category 2; and a process number (Hybrid ARQ process number) , information indicating the type of redundant bits (RV(redundancy version)), a new data indicator when asynchronous hybrid ARQ (HARQ) is adopted and a retransmission sequence number when synchronous HARQ is adopted, that are included in Category 3. In the present embodiment, a case such that the scheduling information generator 104 generates all of the information items recited above is described. The scheduling information generator 104 reports the information items generated to the mobile station 200 via the transmitter 102.

The transmitter 102 reports, to the scheduling-information reception determining section 114, scheduling-information transmission information indicating that the scheduling information items have been transmitted.

The receiver 112 receives from the mobile station 200 a receive acknowledgment for the scheduling information items, and inputs the receive acknowledgment to the scheduling-information reception determining section 114.

Based on the receive acknowledgment input by the receiver 112, the scheduling-information reception determining section 114 determines whether scheduling information is received, e.g., whether decoding of the scheduling information has been successful, at the mobile station 200. If it is determined that scheduling information is received at the mobile station 200, the scheduling-information reception determining section 114 reports, to the scheduler 108, scheduling-information reception information indicating that scheduling information has been received at the mobile station 200.

The scheduler 108 instructs the shared channel generator 106 to transmit a shared channel in response to reporting of the scheduling-information reception information from the scheduling-information reception determining section 114. As a result, a shared channel is transmitted from the transmitter 102.

The receive acknowledgement for the shared channel is input to the shared-channel reception determining section 116 via the receiver 112. Based on the receive acknowledgement for the shared channel that is transmitted from the mobile station 200, the shared-channel reception determining section 116 determines whether the shared channel is received at the mobile station 200 based on the receive acknowledgment for the shared channel that has been transmitted from the mobile station 200, and reports the result to the scheduler 108. The scheduler 108 schedules to allocate wireless resources to the respective users in response to the reporting from the shared-channel reception determining section 116 in order to retransmit the shared channel or in order to transmit data stored in the data buffer 110.

On the other hand, based on the time elapsed from the time the scheduling-information transmission information had been input from the transmitter 102, if the receive acknowledgment is not input even after a predetermined time elapses, the scheduling-information reception determining section 114 determines that scheduling information has not been received at the mobile station 200. The scheduling-information reception determining section 114 instructs the scheduler 108 to reschedule in order to transmit data in subframes making up a TTI due to be allocated that corresponds to the scheduling information transmitted to the mobile station 200.

The scheduler 108 reschedules in response to an instruction from the scheduling-information reception determining section to reschedule. For example, the scheduler 108 divides multiple RLC-PDUs within transport blocks (TBs), and reorganizes (remultiplexes) the TBs.

For example, when a user continues to use wireless resources allocated, but only subframes less than subframes to be allocated can be allocated, subframes less than the subframes to be allocated are redivided and allocated to the user by the scheduler 108.

Moreover, the scheduler 108 may allocate, to the subframes less than subframes to be allocated, part of the data multiplexed to the subframes. Furthermore, the scheduler 108 may allocate, to another user, subframes less than subframes to be allocated. In this case, scheduling is performed at a different timing for a user to be allocated to.

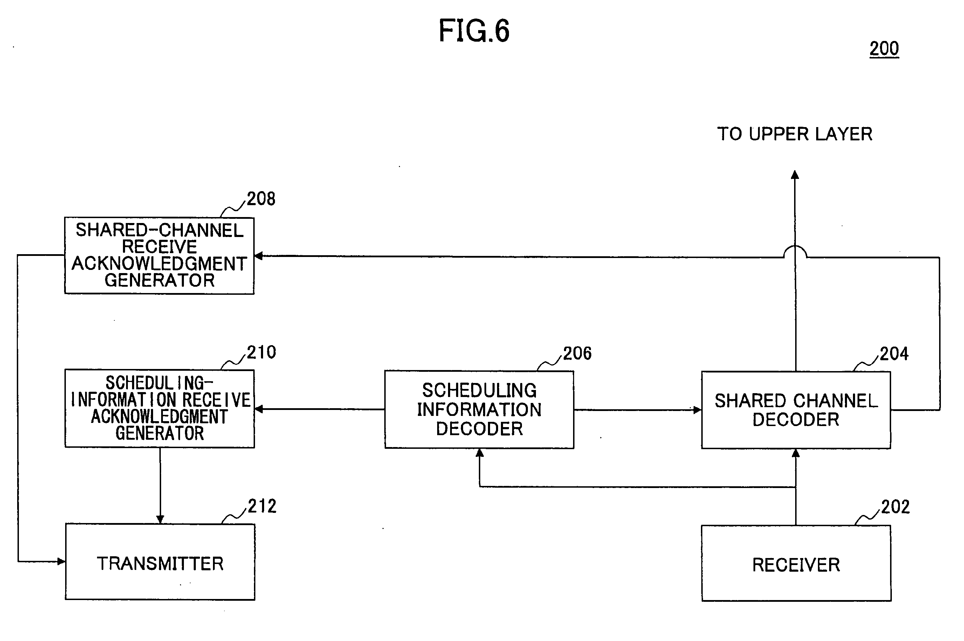

Now, a mobile station 200 according to the embodiment of the present invention is described with reference to FIG. 6.

The mobile station 200 includes a receiver 202, a shared-channel decoder 204, a scheduling-information decoder 206, a shared-channel receive acknowledgment generator 208, a scheduling-information receive acknowledgment generator 210 as a unit which generates a receive acknowledgment, and a transmitter 212.

Scheduling information transmitted by the base station 100 is received at the receiver 202 and the received information is input to the scheduling-information decoder 206.

The scheduling-information decoder 206 decodes the scheduling information input, determines whether wireless resources are allocated to the own mobile station 200, and, if yes, reports to the scheduling-information receive acknowledge generator 210 that the scheduling information has been received.

In response to a report of receiving scheduling information input from the scheduling-information decoder 206, the scheduling-information receive acknowledgment generator 210 generates a scheduling-information receive acknowledgment, and transmits the generated acknowledgment to the base station 100 via the transmitter 212.

Moreover, the scheduling-information decoder 206 inputs the decoded result of the scheduling information to the shared-channel decoder 204.

Furthermore, after transmitting the scheduling-information receive acknowledgment, the shared channel is received and the received channel is input to the shared-channel decoder 204 by the receiver 202.

The shared-channel decoder 204 decodes the shared channel input, and reports to the upper layer. Moreover, when the decoding of the shared channel is completed, the shared-channel decoder 204 inputs, to the shared-channel receive acknowledgement generator 208, a shared-channel decoding completion report indicating that the decoding of the shared channel is completed.

In response to the shared-channel decoding completion report input by the shared-channel decoder 204, the shared-channel receive acknowledgment generator 208 generates a shared-channel receive acknowledgment and reports the generated acknowledgment to the base station 100 via the transmitter 212.

Now, an operation of the wireless communications system according to the present embodiment is described.

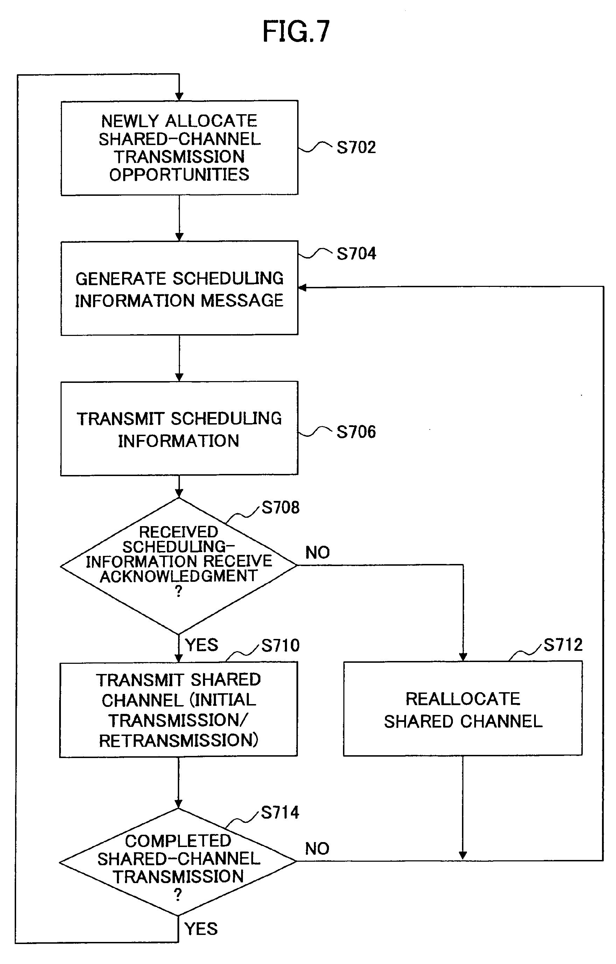

An operation of the base station 100 is explained with reference to FIG. 7.

The scheduler 108 newly allocates shared-channel transmission opportunities (step S702). For example, the scheduler 108 variably controls a TTI length including multiple subframes to be allocated to a mobile station, and allocates shared-channel transmission opportunities.

Then, the scheduling information generator 104 generates a scheduling-information message (step S704).

Then, the transmitter 102 transmits the scheduling information (step S706).

Then, the scheduling-information reception determining section 114 determines whether a receive acknowledgment for the scheduling information is received (step S708).

If it is determined that the receive acknowledgment for the scheduling information is received (step S 708: YES) the transmitter 102 transmits the shared channel generated at the shared channel generator 106 (step S710). The receive acknowledgment for the transmitted shared channel is transmitted from the mobile station 200, and based on whether the receive acknowledgment has been received, the shared-channel reception determining section 116 determines whether the shared channel is received at the mobile station 200. If it is determined that the shared channel is not received at the mobile station 200, the shared-channel reception determining section 116 instructs the transmitter 102 to retransmit.

If it is determined that the shared channel is received at the mobile station 200, the shared-channel reception determining section 116 reports to the scheduler 108 that the shared channel has been received at the mobile station 200.

Then, the scheduler 108 determines whether the shared-channel transmission is completed (step S714).

If it is determined that the shared-channel transmission is completed (step S714: YES) the process returns to step S702.

On the other hand, if it is not determined that the shared-channel transmission is completed (step S714: NO) the process returns to step S704.

In step S708, if it is determined that the scheduling-information receive acknowledgment is not received (step S708: NO) for example, if a predetermined time elapses from the time the scheduling information is transmitted, the scheduling-information receive determining section 114 instructs the scheduler 108 to reallocate the downlink shared channel. The scheduler 108 reallocates the downlink shared channel according to the instruction by the scheduling-information reception determining section 114 (step S712). Then the process returns to step S704.

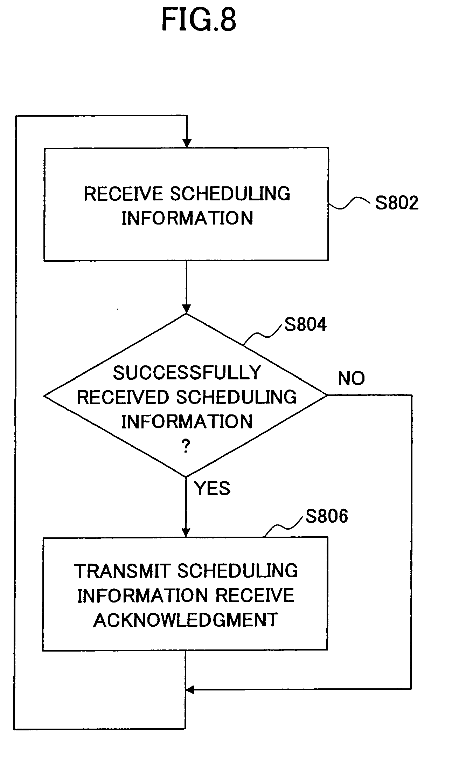

An operation of the mobile station 200 is explained with reference to FIG. 8. Scheduling information transmitted by the base station 100 is received at the receiver 202 and the received information is input to the scheduling-information decoder 206 (step S802).

Then, the scheduling-information decoder 206 decodes the scheduling information, and determines whether the scheduling information is successfully received, e.g., whether the scheduling information is successfully decoded (step S804).

If it is determined that the scheduling information is successfully received (step S 804: YES) the scheduling-information decoder 206 instructs the scheduling-information receive acknowledgment generator 210 to generate a scheduling-information receive acknowledgment. According to the instruction by the scheduling-information decoder 206, the scheduling-information receive acknowledgment generator 210 generates the scheduling-information receive acknowledgment, and transmits the generated acknowledgment via the transmitter 212 (step S806).

On the other hand, if it is not determined that the scheduling information is successfully received (step S804: NO) the process returns to step S802.

Now, a mobile communications system according to another embodiment of the present invention is described.

The wireless communications system according to the present embodiment includes a base station 100 and a mobile station 200, as described in the above.

In the wireless communications system according to the present embodiment, the base station 100 determines whether to request the mobile station 200 to send a receive acknowledgment for scheduling information.

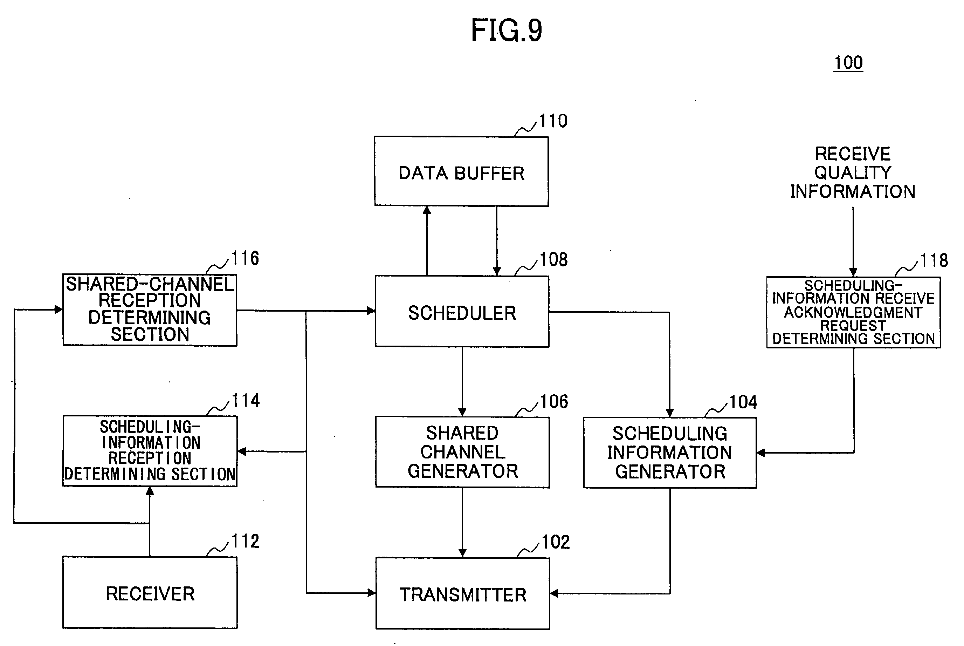

An operation of the base station 100 is explained with reference to FIG. 9.

The base station 100 differs from the base station described with reference to FIG. 4 in that it includes a scheduling-information receive acknowledgment request determining section 118.

The scheduling-information receive acknowledgment request determining section 118 determines whether to request a receive acknowledgment for scheduling information. For example, based on the number of subframes to be allocated to the mobile station 200, the scheduling-information receive acknowledgment request determining section 118 determines to request the receive acknowledgment if the number is not less than a predetermined number of subframes.

Moreover, the scheduling-information receive acknowledgment request determining section 118 may determine whether to request the mobile station 200 to send a scheduling-information receive acknowledgment based on receive quality information such as a CQI (Channel Quality Indicator) which is reported from the mobile station 200. In this case, receive quality information transmitted from the mobile station 200 is input to the scheduling-information receive acknowledgment request determining section 118. For example, if the input receive quality information indicates a receive quality which is worse than a predetermined receive quality, the scheduling-information receive acknowledgment request determining section 118 determines that there may be a case such that scheduling information is not received at the mobile station 200, and determines to request the receive acknowledgment.

Moreover, the scheduling-information receive acknowledgment request determining section 118 may determine whether to request the mobile station 200 to send a scheduling-information receive acknowledgment based on the quality of a signal received from the mobile station 200. For example, if the quality is worse than a predetermined quality, the scheduling-information receive acknowledgment determining section 118 determines that there may be a case such that scheduling information is not received at the mobile station 200, and determines to request the receive acknowledgment.

If it is determined that a request to the mobile station 200 is to be made for the scheduling-information receive acknowledgment, the scheduling-information receive acknowledgment request determining section 118 reports to the scheduling information generator 104 that the request is to be made for the scheduling-information receive acknowledgment. If it is reported by the scheduling-information receive acknowledgment request determining section 118 that the receive acknowledgment request is to be made, scheduling information is generated including information indicating that the receive acknowledgment request is to be made. For example, the scheduling information generator 104 generates scheduling information including a flag indicating whether to request the receive acknowledgment.

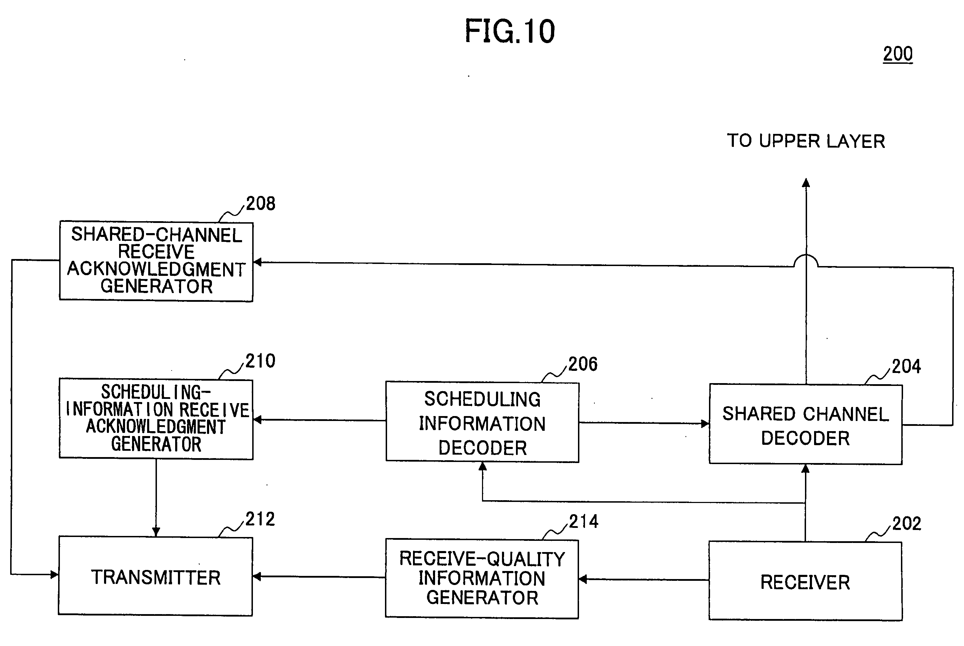

An operation of the mobile station 200 is explained with reference to FIG. 10.

The mobile station 200 differs from the mobile station described with reference to FIG. 6 in that it includes a receive-quality information generator 214.

Based on a signal received from the base station 100, the receive-quality information generator 214 generates receive-quality information such as a CQI (Channel Quality Indicator) and reports the generated information to the base station 100 via the transmitter 212.

The scheduling-information decoder 206 decodes the scheduling information transmitted from the base station 100, and determines whether a receive acknowledgment is requested. If it is determined that the receive acknowledgment is requested, the scheduling-information decoder 206 instructs the scheduling-information receive acknowledgment generator 210 to generate the receive acknowledgment. Here, when some of the scheduling information is decoded, the scheduling-information decoder 206 may instruct the scheduling-information receive acknowledgment generator 210 to generate the receive acknowledgment. It is envisaged that decoding some of the scheduling information makes it possible also to decode other information. In this way, a delay in transmitting a receive acknowledgment may be reduced. For example, when information indicating allocation of wireless resources, out of scheduling information, is decoded, the scheduling-information decoder 206 instructs the scheduling-information receive acknowledgment generator 210 to generate the receive acknowledgment.

Moreover, the transmitter 212 may transmit the receive acknowledgment as Layer 1 control information.

Now, an operation of the wireless communications system according to the present embodiment is described.

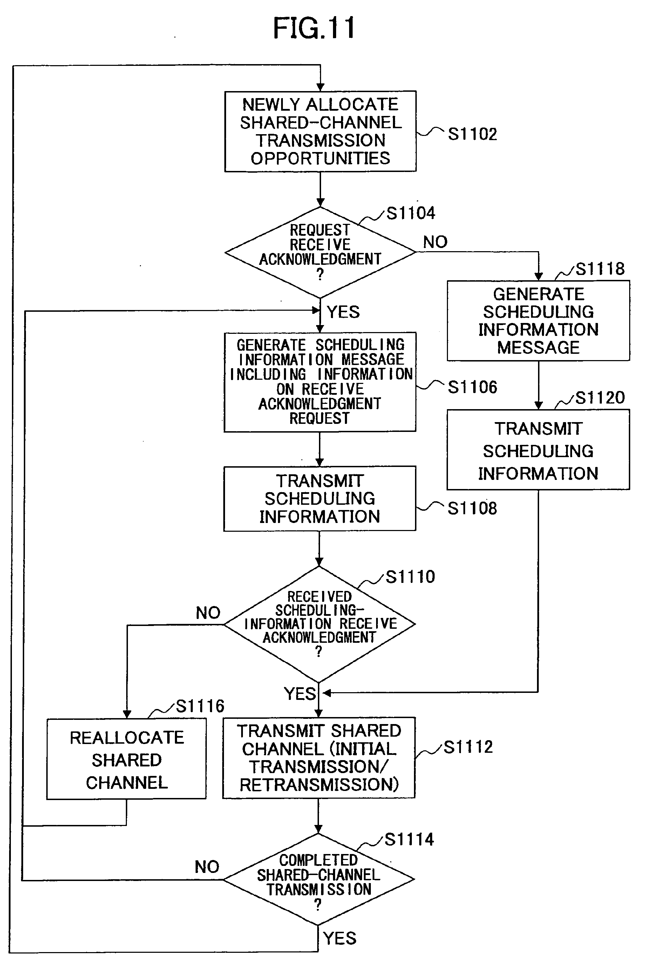

An operation of the base station 100 is explained with reference to FIG. 11.

The scheduler 108 newly allocates shared-channel transmission opportunities (step S1102).

Then, based on the number of subframes to be allocated to the mobile station 200, the scheduling-information receive acknowledgment request determining section 118 determines whether to request the receive acknowledgment. For example, when the number of subframes to be allocated to the mobile station 200 is less than a predetermined value, it is determined that a loss due to receive error at the mobile station or a delay that would be caused by not requesting a receive acknowledgment should be small, and that the receive acknowledgment is not requested.

On the other hand, if the number of subframes to be allocated to the mobile station 200 is greater than a predetermined value, when the scheduling-information receive acknowledgment request determining section 118 does not request a receive acknowledgment, a receive error of the scheduling information occurs at the mobile station 200, and a shared channel is transmitted, the resulting loss due to the receive error at the mobile station or a delay caused by the retransmission thereof may be large, so that a receive acknowledgment is requested.

If it is determined to request a receive acknowledgment (step S1104: YES) the scheduling information generator 104 generates a scheduling information message including information on the receive acknowledgment (step S1106).

Then, the transmitter 102 transmits the scheduling information (step S1108).

Then, the scheduling-information reception determining section 114 determines whether a receive acknowledgment for the scheduling information is received (step S1110).

If it is determined that the receive acknowledgment for the scheduling information is received (step S1110: YES) the transmitter 102 transmits the shared channel generated at the shared channel generator 106 (step S1112). The receive acknowledgment for the transmitted shared channel is transmitted from the mobile station 200, and based on the receive acknowledgment received, the shared-channel reception determining section 116 determines whether the shared channel is received at the mobile station 200. If it is determined that the shared channel is not received at the mobile station 200, the shared-channel reception determining section 116 instructs the transmitter 102 to retransmit.

If it is determined that the shared channel is received at the mobile station 200, the shared-channel reception determining section 116 reports to the scheduler 108 that the shared channel has been received at the mobile station 200.

Then, the scheduler 108 determines whether the shared-channel transmission is completed (step S1114).

If it is determined that the shared-channel transmission is completed (step S1114: YES) the process goes back to step S1102.

On the other hand, if it is not determined that the shared-channel transmission is completed (step S1114: NO) the process returns to step S1106.

In step S1110, if it is determined that the downlink scheduling-information receive acknowledgment is not received (step S1110: NO) for example, if a predetermined time elapses from the time the scheduling information is transmitted, the scheduling-information receive determining section 114 instructs the scheduler 108 to reallocate the downlink channel. The scheduler 108 reallocates a downlink shared channel according to the instruction by the scheduling-information reception determining section 114 (step S1116). Then the process returns to step S1106.

If it is determined in step S1104 that the receive acknowledgment is not requested (step S1104: NO) the scheduling information generator 104 generates a scheduling information message (step S1118).

Then, the transmitter 102 transmits the scheduling information (step S1120). Then the process transitions to step S1112.

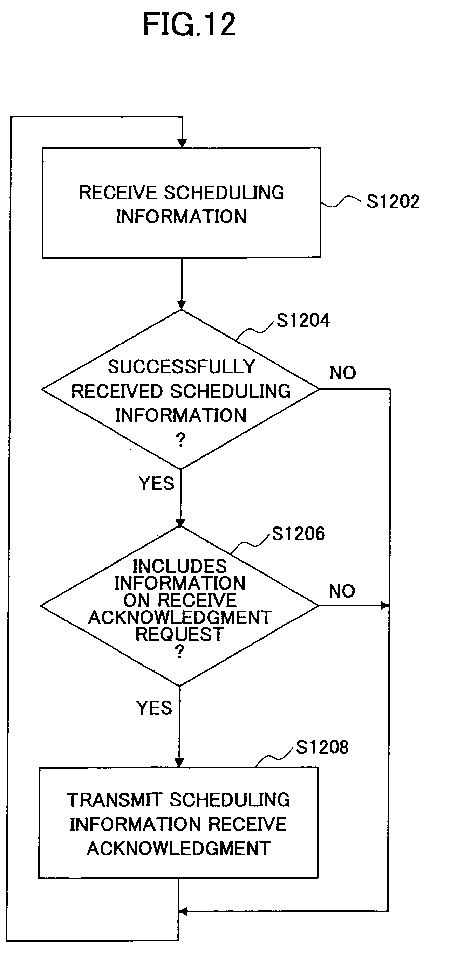

An operation of the mobile station 200 is explained with reference to FIG. 12.

Based on a signal received from the base station 100, mobile station 200, at the receive-quality information generator 214, generates receive-quality information such as a CQI (Channel Quality Indicator) and reports the generated information to the base station 100.

Scheduling information transmitted by the base station 100 is received at the receiver 202 and the received information is input to the scheduling-information decoder 206 (step S1202).

Then, the scheduling-information decoder 206 decodes the scheduling information, and determines whether the scheduling information is successfully received, e.g., whether the scheduling information is successfully decoded (step S1204).

If it is determined that the scheduling information is successfully received (step S1204: YES) the scheduling-information decoder 206 determines whether information on the receive acknowledgment request is included in the scheduling information (step S1206).

If it is determined that the scheduling information includes the information on the receive acknowledgment request (step S1206: YES) the scheduling-information decoder 206 instructs the scheduling-information receive acknowledgment generator 210 to generate a scheduling-information receive acknowledgment. According to the instruction by the scheduling-information decoder 206, the scheduling-information receive acknowledgment generator 210 generates the scheduling-information receive acknowledgment, and transmits the generated acknowledgment via the transmitter 212 (step S1208).

On the other hand, if it is not determined that the scheduling information is successfully received (step S 1204: NO) or that the scheduling information does not include information for which a receive acknowledgment is requested (step S 1206: NO) the process returns to step S1202.

In the present embodiment, while a case is described for a base station 100 determining whether to request a receive acknowledgment for scheduling information based on receive-quality information reported from the mobile station 200, the base station 100 may determine based on the quality of a receive signal such as an uplink data channel, transmitted from the mobile station 200.

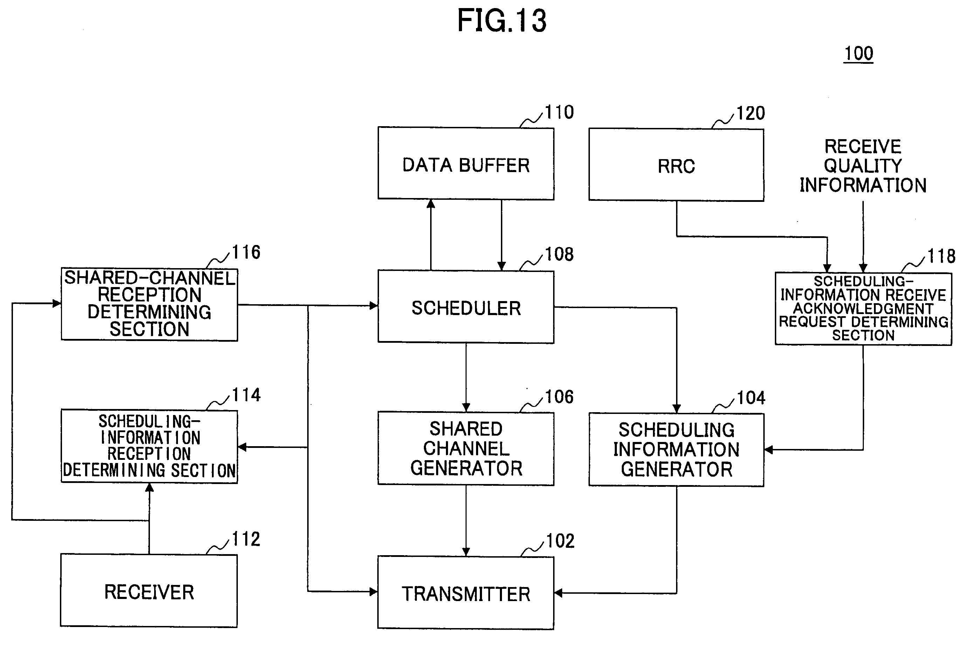

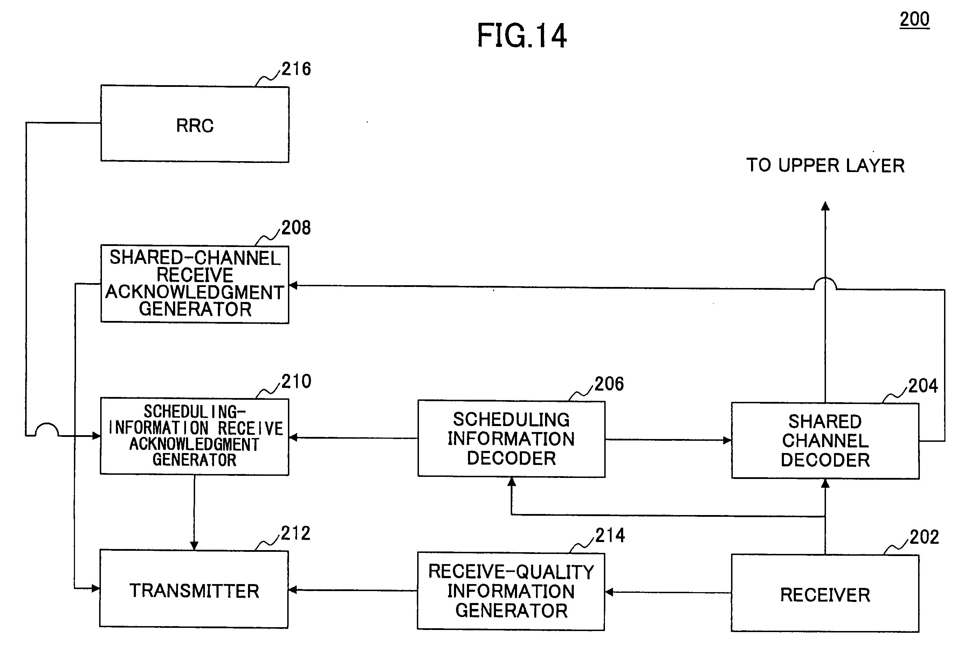

Moreover, in the present embodiment, while a case is described for a base station 100 reporting to a mobile station 200 scheduling information including a request for a receive acknowledgment for scheduling information, reporting may be done by RRC to the mobile station 200. In this case, in the base station 100, as shown in FIG. 13, information indicating whether to request scheduling-information receive acknowledgment is input from a RRC 120 to the scheduling-information receive acknowledgment request determining section 118. Moreover, in the mobile station 200, as shown in FIG. 14, information indicating whether to send a scheduling-information receive acknowledgment is input from a RRC 216 to the scheduling-information receive acknowledgment request generator 210.

The base station, mobile station, and method of communicating according to the present invention may be applied to wireless communications systems.

The present application claims priority based on Japanese Patent Application No. 2006-127998 filed on May 1, 2006 with the Japanese Patent Office, the entire contents of which are hereby incorporated herein by reference.

## Claims

1. A base station, comprising:
a transmitting unit which variably controls a TTI length including multiple subframes, each of which is to be allocated to a mobile station, and transmits to the mobile station scheduling information which indicates allocation of wireless resources to each user;
a receive-acknowledgment determining unit which determines whether a receive acknowledgment for the scheduling information is reported from the mobile station; and
a shared-channel transmitting unit which transmits a shared channel if it is determined that the receive acknowledgment is received.

2. The base station as claimed in claim 1, wherein the receive-acknowledgment determining unit determines that the receive acknowledgment is not reported, if a predetermined time elapses after the scheduling information is transmitted and a receive acknowledgment is not reported.

3. The base station as claimed in claim 1, further comprising:
a scheduling unit which schedules, for data transmission, subframes corresponding to a TTI to be allocated, if it is determined that the receive acknowledgment is not reported.

4. The base station as claimed in claim 3, wherein the scheduling unit divides RLC-PDUs within transport blocks and multiplexes the transport blocks.

5. The base station as claimed in claim 1, comprising:
a receive-acknowledgment request determining unit which determines whether to make a receive acknowledgment request for the scheduling information; and
a reporting unit which, if it is determined that the receive acknowledgment for the scheduling information is to be made, reports to the mobile station that transmitting the receive acknowledgment is necessary.

6. The base station as claimed in claim 5, wherein the receive-acknowledgment request determining unit determines that the receive acknowledgment is to be made if the number of subframes to be allocated to the mobile station is not less than a predetermined number of subframes.

7. The base station as claimed in claim 5, wherein the receive-acknowledgment request determining unit determines that the receive acknowledgment request is to be made if receive-quality information reported from the mobile station is worse than a predetermined receive quality.

8. The base station as claimed in claim 5, wherein the receive-acknowledgment request determining unit determines that the receive acknowledgment request is to be made if a quality of a signal received from the mobile station is worse than a predetermined receive quality.

9. The base station as claimed in claim 5, wherein the reporting unit reports, with the scheduling information, that transmitting the receive acknowledgment is necessary.

10. The base station as claimed in claim 5, wherein
the reporting unit reports, by radio resource control, that transmitting the receive acknowledgment is necessary.

11. A mobile station, comprising:
a scheduling-information decoding unit which decodes scheduling information indicating allocation of wireless resources to each user that is reported by a base station; and
a receive-acknowledgment generating unit which generates a receive acknowledgment for the scheduling information according to the decoded result of the scheduling information.

12. The mobile station as claimed in claim 11, further comprising:
a receive-acknowledgment transmitting unit which transmits the receive acknowledgment as layer 1 control information.

13. The mobile station as claimed in claim 11, wherein
the receive-acknowledgment generating unit generates a receive acknowledgment for the scheduling information when some of the scheduling information is decoded.

14. A method of communicating, comprising the steps of:
transmitting, by a base station to a mobile station, scheduling information indicating allocation of wireless resources to each user;
decoding, by the mobile station, the scheduling information indicating allocation of wireless resources to each user that is reported by the base station;
generating, by the mobile station, a receive acknowledgment for the scheduling information according to the decoded result of the scheduling information;
determining, by the base station, whether the receive acknowledgment for the scheduling information is reported from the mobile station; and
transmitting, by the base station, a shared channel if it is determined that the receive acknowledgment is received.
